(19) Europäisches Patentamt
European Patent Office
Office européen des brevets

(11) Veröffentlichungsnummer: **0 039 423**
**B1**

# (12) EUROPÄISCHE PATENTSCHRIFT

(45) Veröffentlichungstag der Patentschrift: **29.08.84**

(51) Int. Cl.³: **G 11 B 15/29**, G 11 B 15/43

(21) Anmeldenummer: **81102723.4**

(22) Anmeldetag: **10.04.81**

## (54) Bandlaufwerk nach dem Kontaktwickelprinzip.

(30) Priorität: **07.05.80 DE 3017420**

(43) Veröffentlichungstag der Anmeldung: **11.11.81 Patentblatt 81/45**

(45) Bekanntmachung des Hinweises auf die Patenterteilung: **29.08.84 Patentblatt 84/35**

(84) Benannte Vertragsstaaten: **AT DE FR GB NL**

(56) Entgegenhaltungen:
**EP - A - 0 001 820**
**DE - A - 2 247 529**
**DE - U - 7 935 101**
**US - A - 3 593 945**
**US - A - 3 960 342**

(73) Patentinhaber: **BASF Aktiengesellschaft, Carl-Bosch-Strasse 38, D-6700 Ludwigshafen (DE)**

(72) Erfinder: **Schoettle, Klaus, Ladenburger Strasse 70, D-6900 Heidelberg (DE)**
Erfinder: **Flohr, Joachim, Jaegerstrasse 1, D-6806 Viernheim (DE)**
Erfinder: **Maerthesheimer, Rolf, Alzeyer Strasse 74, D-6520 Worms (DE)**

EP 0 039 423 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Bandlaufwerk nach dem Kontaktwackelprinzip mit Bandspulen zum Abgeben und Aufnehmen eines Bandes, die auf relativ zu einer Antriebsrolle bewegbar gelagerten Trägern mittels Andruckeinrichtungen in Kontakt mit dem Umfang der Antriebsrolle bringbar sind, und mit wenigstens einem den Trägern für die Bandspulen zugeordneten Massekörper zum Ausgleich des Massenträgheitsmomentes der beweglichen Träger mit den Bandspulen.

In der US-PS 4 023 748 ist ein derartiges Laufwerk für den Transport eines Magnetbandes beschrieben, bei dem die Träger für die Bandspulen schwenkbar gelagert sind und mittels Federkraft an die Antriebsrolle angedrückt werden.

Bandlaufwerke solcher Art sind störanfällig gegen Stoß- und Erschütterungskräfte, insbesondere in Richtung des Andrucks der Bandspulen an die Antriebsrolle. Die Massenträgheit der beweglichen Träger mit den Bandspulen wirkt einer Stoßkraft, die am Chassis des Laufwerks angreift, entgegen, so daß die in Stoßrichtung vor der Antriebsrolle angeordnete Bandspule weniger an diese und die dahinter befindliche Bandspule mehr an die Antriebsrolle angedrückt werden als während des ungestörten Betriebes. Je nach Größe und damit nach Masse der Bandspulen kann auf diese Weise der Kontaktdruck beispielsweise zwischen der Band aufnehmenden Spule und der Antriebsrolle so stark vermindert oder gar aufgehoben werden, daß der Antrieb der Spule vermindert bzw. unterbrochen ist, während durch den erhöhten Andruck bei der Band abgebenden Spule die Geschwindigkeit des abwickelnden Bandabschnittes, entsprechend der Kontinuität des Masseflusses gummielastischer, inkompressibler Schichten, noch größer wird. Die Folge ist, daß das vermehrt abgegebene Band nicht mehr entsprechend aufgenommen werden kann und die Bandspannung dadurch aufgehoben ist. Gewöhnlich gerät dann das Band aus der Bandführung, so daß der Bandbetrieb auch nach der Stoßeinwirkung gestört bleibt.

Zur Abhilfe dieser Störanfälligkeit ist gemäß der EP-A-0 001 820 bekannt, bei einem Bandlaufwerk vorstehend beschriebener Art zwischen den Trägern mit den Bandspulen eine Kopplungseinrichtung vorzusehen, die in Form eines Stoßdämpfers aus einer Kolben-Zylindereinrichtung mit Druckmittel oder aus einer elektromagnetischen Seil-Roll-Vorrichtung gebildet ist. Dabei kann die Kopplungseinrichtung parallel oder in Reihe zu den Andruckeinrichtungen für die Bandspulenträger angeordnet sein. Eine weitere, noch aufwendigere Ausführungsform der vorgeschlagenen Einrichtung zur Verbindung der Stoßempfindlichkeit sieht vor, daß jedem Träger zwei aufeinander abrollbare Gegengewichte zugeordnet sind, von denen das eine am Chassis des Laufwerks befestigt ist und das andere mit dem zugehörigen Träger in Verbindung steht. Die linienförmige Kontaktstelle der beiden Abrollflächen stellt den Schwenkpunkt für den zugehörigen Träger dar, so daß dieser bei maximalem Bandspulendurchmesser, d. h. dann, wenn die Spule ihre größte Masse aufweist, automatisch an einen Punkt rückt, der dem Spulenkern am nächsten liegt und vom Gegengewicht an weitesten entfernt ist. Durch Stoß- und Erschütterungskräfte werden daher nur geringe Drehmomentkräfte auf die Träger übertragen, so daß der Kontaktdruck zwischen den Bandspulen und der Antriebsrolle nur unwesentlich beeinflußt wird.

Vorliegender Erfindung liegt die Aufgabe zugrunde, ein Bandlaufwerk nach dem Kontaktwikkelprinzip mit Einrichtungen zur Verminderung der Störanfälligkeit des Bandtransports gegen Stoß- und Erschütterungseinwirkungen zu entwickeln, die in ihrem Platzbedarf im Hinblick auf ein möglichst kompaktes tragbares Gerät und in ihrer Einfachheit den bekannten Einrichtungen überlegen sind.

Die Aufgabe wird erfindungsgemäß mit einem Bandlaufwerk der eingangs genannten Art gemäß Patentanspruch 1 gelöst. Damit wird ein tragbares Bandlaufwerk mit sehr niedrigem Eigengewicht bereitgestellt.

In einer vorteilhaften Ausführungsform des Bandlaufwerks nach der Erfindung sind die Träger und der bzw. die ihnen zugeordnete(n) Massekörper durch über Umlenkrollen geführte flexible Verbindungselemente, insbesondere Seile, miteinander verbunden.

In weiteren praktischen Ausführungen kann ein gemeinsamer Massekörper für beide Träger oder es können für jeden Träger jeweils ein Massekörper vorgesehen sein.

Praktisch können die Träger mit Verlängerungen ausgebildet sein, an welchen die Verbindungselemente befestigt sind, zur Erhöhung der durch den (die) Massekörper erzeugten Ausgleichskraft (Ausgleichskräfte) bzw. zur Verringerung der Masse der Massekörper.

Die Vorteile können wesentlich dadurch erreicht werden, wenn die in Form der Träger vorhandenen Hebelarme über die Drehlagerung der Bandspulen hinaus verlängert sind und die Massekörper für den Kraftausgleich der Stoßkräfte an diesen Verlängerungen angreifen, so daß durch entsprechend gewählte Hebelverhältnisse bezüglich der Bandspulen und der Massekörper letztere klein bemessen werden können. Wird beispielsweise jeder Bandspule jeweils ein Massekörper zugeordnet und die Träger für die Bandspulen bis zum Angriffspunkt der Massekörper auf das Doppelte des Abstandes zwischen der Trägerlagerung am Chassis und der Bandspulenlagerung verlängert, genügt ein Massekörpergewicht von einem Viertel des Bandspulengewichts.

Es ist ferner vorteilhaft, möglichst vorzusehen, daß die flexiblen Verbindungselemente über eine nach dem Prinzip des Flaschenzugs wirkende Seilführung geführt sind zur Erhöhung der durch den (die) Massekörper erzeugten Ausgleichskraft (Ausgleichskräfte) bzw. zur Verringerung der Masse der Massekörper.

Praktisch können im Falle von zwei Massekörpern diese in Reihe mit oder parallel zu den Andruckeinrichtungen angeordnet sein. Dabei können die beiden Massekörper auch zweckmäßig über die Andruckeinrichtungen direkt miteinander verbunden sein.

Mit der durch die Erfindung konstruktiv einfachen und geringen Raum beanspruchenden Einrichtung zur Kompensation von Stoß- und Erschütterungseinwirkungen ist eine wichtige Voraussetzung geschaffen, Bandlaufwerke nach dem Kontaktwickelprinzip auch für tragbare Bildaufzeichnungs- und -wiedergabegeräte einsetzen zu können. Der Bandtransport der für die Videosignalspeicherung äußerst dünnen Magnetbänder ist gegen mechanische Störungseinflüsse besonders empfindlich. Mit Hilfe der erfindungsgemäßen Einrichtungen bleibt der Kontaktdruck zwischen den Bandspulen und der Antriebsrolle auch bei Stoß- und Erschütterungseinwirkungen auf das Bandlaufwerk in einem für einen störungsfreien Bandtransport notwendigen Bereich aufrechterhalten.

Weitere Vorteile und Einzelheiten des erfindungsgemäßen Bandlaufwerks ergeben sich aus der nachfolgenden Beschreibung verschiedener und in der Zeichnung dargestellter Ausführungsbeispiele. In der Zeichnung zeigt

Fig. 1 ein Bandlaufwerk mit Bandspulen und Antriebsrolle sowie mit in Reihe mit einer Andruckeinrichtung angeordneten Massekörpern, die durch über am Chassis befestigte Umlenkrollen geführte Seile mit den Trägern der Bandspulen verbunden sind,

Fig. 2 wie Fig. 1, jedoch mit an den Trägern befestigten Umlenkrollen,

Fig. 3 ein Bandlaufwerk mit einem einzigen, parallel zur Andruckeinrichtung angeordneten Massekörper,

Fig. 4 ein Bandlaufwerk wie in Fig. 3, jedoch mit an den Trägern befestigten Umlenkrollen.

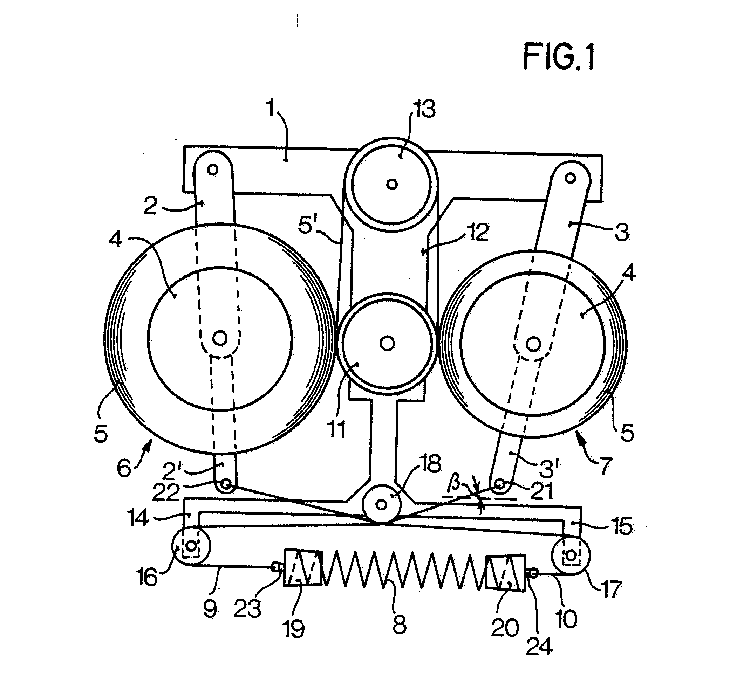

In Fig. 1 ist ein Bandlaufwerk nach dem Kontaktwickelprinzip schematisch wiedergegeben. Am Laufwerkchassis 1 sind zwei Träger 2 und 3 schwenkbar gehalten, auf denen jeweils eine aus Wickelkern 4 und Bandwickel 5 bestehende Bandspule 6 und 7 drehbar gelagert ist. Eine Feder 8 als Andruckeinrichtung zieht über flexible Verbindungselemente, beispielsweise Seile 9 und 10 die Träger zusammen, so daß die Bandspulen an eine zentrale mit einem elastischen Umfangsbelag versehene Antriebsrolle 11 angedrückt werden. Anstelle der Seile können auch bandförmige Verbindungselemente verwendet werden. Die Antriebsrolle ist in einem Mittelteil 12 des Chassis 1 drehbar gelagert und von einem, in der Zeichnung nicht sichtbaren Motor antreibbar. Das von der einen Bandspule zur anderen zu transportierende Band 5′ kann zwischen den Kontaktstellen Bandspule/Antriebsrolle über eine Umlenkrolle 13 geführt werden, wobei beispielsweise für magnetische Signalspeicherung zwischen den beiden Rollen 11 und 13 mindestens ein Magnetkopf vorgesehen werden kann, der der Übersichtlichkeit wegen in der Zeichnung weggelassen ist.

Für die erfindungsgemäße Einrichtung zur Kompensation von Stoß- und Erschütterungskräften ist das Chassis in Form zweier symmetrisch angeordneter Ausleger 14 und 15 erweitert, die an ihrem Ende jeweils eine drehbare Umlenkrolle 16 und 17 aufnehmen. Die Träger 2 und 3 sind über den Drehlagerpunkt der Bandspulen hinaus verlängert, so daß das am Ende der Verlängerung 3′ angreifende Seil 9 über eine zentrale Stützrolle 18 und die Umlenkrolle 16 zu einem Massekörper 19 und das an der Verlängerung 2′ angreifende Seil 10 über dieselbe Stützrolle und die Umlenkrolle 17 zu einem zweiten Massekörper 20 geführt werden kann. Die beiden Massekörper sind durch die Feder 8 miteinander verbunden.

Ein auf das Bandlaufwerk einwirkender Stoßimpuls versetzt zumindest die entsprechend der Stoßrichtung zum Abheben von der Antriebsrolle 11 neigende Bandspule infolge der freibeweglichen Träger und die ebenfalls freibeweglichen Massekörper in Bewegung gleicher Richtung, so daß die durch die Stoßbeschleunigung der Massen von Bandspulen und Massekörper entstehenden Kräfte durch die umlenkenden Seilverbindungen entgegenwirkend verknüpft sind. Dadurch wird die eine Bandspule am Abheben von der Antriebsrolle gehindert, während die andere, unter dem Stoßimpuls noch stärker an die Antriebsrolle andrückende Bandspule durch die Beschleunigungskraft der Massekörper entlastet wird. Für die kurzzeitige Stoßwirkung kann die Feder näherungsweise als starre Verbindung betrachtet werden, so daß auf jeden Träger und damit auf jede Bandspule beide Massekörper 19 und 20 wirken. Die Bemessung der Massekörper richtet sich, wie eingangs an einem Beispiel gezeigt, nach der Masse der Träger mit den Bandspulen und den Hebelverhältnissen bezüglich der Bandspulendrehlager bzw. der Seilangriffspunkte zu den Drehlagern der Träger 2 und 3. Ferner ist der Winkel $\beta$ zu berücksichtigen, unter dem das Seil an der Trägerverlängerung der zum Abheben neigenden, aufwickelnden Bandspule angreift.

Die Federkraft der Feder 8 wirkt über die Massekörper 19, 20, die Seile 9, 10 und die Verlängerungen 2′, 3′ der Träger 2, 3 auf die Bandspulen 6 und 7.

Die Seile 9, 10 sind einerseits in Bohrungen 21, 22 der Verlängerungen 2′, 3′ verankert und andererseits an Ösen 23, 24 der Massekörper befestigt.

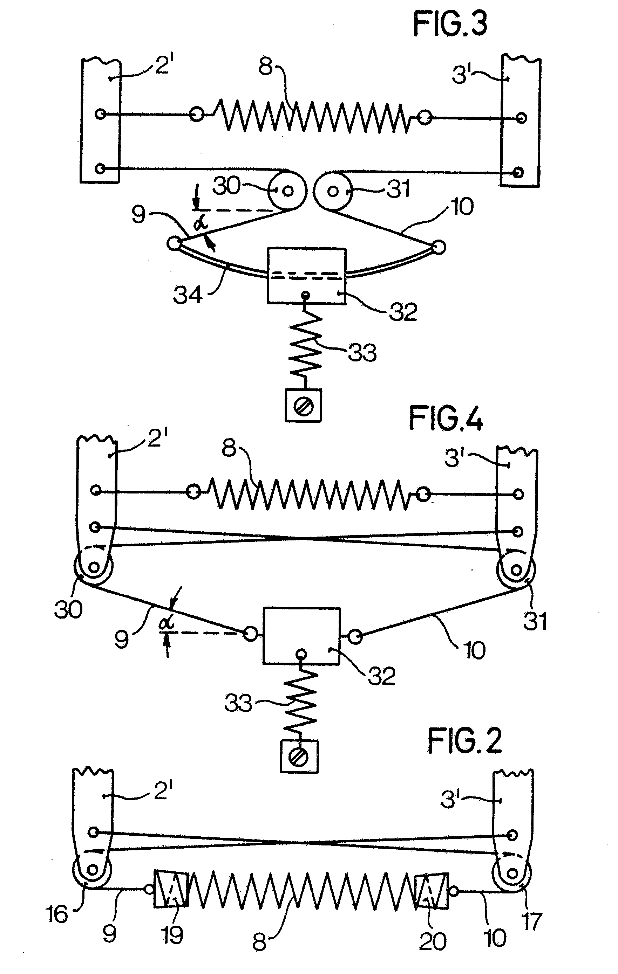

Wie Fig. 2 zeigt, können die Umlenkrollen 16, 17 auch auf den Verlängerungen 2′, 3′ der Träger 2, 3 angebracht sein. Der Funktionsmechanismus ist der gleiche wie bei der Einrichtung nach Fig. 1. Die Kombination von Andruckfeder 8 und Massekörpern 19, 20 ist hier besonders einfach und raumsparend und deshalb besonders für Miniaturgeräte geeignet.

Ein Ausführungsbeispiel für die parallele Anordnung von Andruckeinrichtung und Massekörpern ist in Fig. 3 schematisch dargestellt. Sowohl die Feder 8 als auch die Seile 9 und 10 sind an den Verlängerungen 2', 3' der Träger 2, 3 für die Bandspulen 6 und 7 befestigt. Die Seile sind über Umlenkrollen 30 und 31, die von einem verlängerten Chassismittelteil (in der Zeichnung nicht dargestellt) aufgenommen werden, zu einem einzigen, zentralen Massekörper 32 geführt, der über geeignete Spannmittel 33 wie Federn oder gummielastische Bänder, am Laufwerkchassis 1 gehalten ist.

Für die Seilbewegungen, die von der bei Kontaktwickellaufwerken auf den während des Umspulbetriebs sich stetig ändernden Durchmessergrößenverhältnisse der Bandspulen bekannterweise beruhenden Änderung des Abstandes zwischen den Bandspulenachsen herrühren, ist es bei den Ausführungsformen nach den Fig. 3 und 4 erforderlich, daß die Seile unter einem Winkel $\alpha$ auf den Massekörper geführt werden. Damit die effektive Kraftkomponente $K'_G$ zur Stoßkompensation durch die Wahl des Winkels $\alpha$ nicht zu klein wird, sind die geometrischen Abmessungen für die Länge der Träger 2, 3 bzw. der verlängerten Träger 2', 3' entsprechend dem am Ende der Beschreibung angegebenen Beispiel zu wählen. Der dort verwendete Winkel $\beta$ nach Fig. 1 ist dabei sinngemäß durch den hier interessierenden Winkel $\alpha$ nach den Fig. 3 und 4 zu ersetzen.

Der Massekörper kann beispielsweise langgestreckt ausgeführt sein oder unbewegliche, auslegende Halteelemente 34 besitzen, an deren Enden die Seile 9 und 10 befestigt sind. Die Halteelemente können als Federn ausgebildet sein, so daß sie die Feder 8 ersetzen können. Die bei einem Stoßimpuls am Seil 9 bzw. 10 angreifende Beschleunigungskraft des Massekörpers 32 wirkt der durch den Stoß verursachten Bewegung der Bandspulen durch die Umlenkung an den Rollen 30 und 31 entgegen, so daß der Kontaktandruck an die Antriebsrolle 11 erhalten bleibt. Bei der Bemessung des Massekörpers 32 ist ebenfalls der oben erwähnten Winkel $\alpha$ entsprechend zu berücksichtigen.

Eine Variante der vorstehend erläuterten Ausführungsform ergibt sich gemäß Fig. 4 dadurch, daß die Umlenkrollen 30, 31 an den Verlängerungen 2' und 3' der Träger 2 und 3 drehbar angebracht sind. Diese Anordnung hat wie die nach Fig. 2 den Vorteil, daß die Seile 9 und 10 in Richtung der besonderen Stoßempfindlichkeit des Laufwerkbetriebs auf den Massekörper geführt werden können.

Im normalen, d. h. stoß- und erschütterungsfreien Betrieb der Bandlaufwerke nach der Erfindung sind die Bewegungen der Träger 2 und 3 unter dem Umspulen des Bandes von einer Spule zur anderen äußerst langsam, so daß die Massekörper nicht wirksam werden.

Selbstverständlich lassen sich im Rahmen der Erfindung noch weitere Ausführungsformen ableiten, deren Ausgestaltung dem jeweiligen Anwendungsfall anzupassen ist. Sie werden jedoch auf den erfindungswesentlichen Merkmalen beruhen, die durch die beschriebenen Ausführungsbeispiele aufgezeigt wurden. Beispielsweise läßt sich durch eine nach dem Prinzip des Flaschenzugs arbeitende Seilführung eine weitere Vervielfältigung der Kompensationskraft beim Stoß erreichen.

Beispiel

Auf ein Bandlaufwerk nach Fig. 1 wirkt in Richtung der hintereinander liegenden Drehlager der Bandspulen 6, 7 und der Antriebsrolle 11 ein Stoß mit der Beschleunigung b = 40 g. Das mittlere Gewicht eines Trägers zusammen mit der Bandspule beträgt $G_B$ = 60 pond ($G_B$ = 0,0061 N). Die mittlere Masse ist dabei $m_B$ = 0,0061 kg.

Die Länge jedes Trägers 2, 3 zwischen dessen Drehlager am Chassis 1 und dem Drehlager der Bandspule ist $l_1$ = 3 cm ($l_1$ = 0,03 m), die des verlängerten Trägers $l_2$ = 6 cm ($l_2$ = 0,06 m). Die Masse jedes Massekörpers 19, 20 errechnet sich:

$$K_B = m_B \cdot b$$

$$K_G = m_G \cdot b$$

$$l_1 \cdot K_B = l_2 \cdot K'_G$$

$$K'_G = K_G \cdot \cos\beta$$

für $\beta$ = 10° ergibt sich:

$$m_G = \frac{l_1 \cdot m_B}{l_2 \cdot \cos\beta} = 0{,}0031 \ldots \text{kg},$$

welche ein Gewicht von $G_G$ = 30,4 pond ($G_G$ = 0,0031 N) besitzt.

K = Kraft

G = Gewicht

Index:

B = Bandspule

G = Massekörper

Für die Feder 8 ist eine Federkonstante C von ca. $10^{-5}$ kp/mm ($10^3$ N/m) bei einer maximalen Anpreßkraft an der Antriebswelle von 700 pond (0,071 N) vorgesehen.

**Patentansprüche**

1. Bandlaufwerk nach dem Kontaktwickelprinzip mit Bandspulen ( 6 und 7) zum Abgeben und Aufnehmen eines Bandes, die auf relativ zu einer Antriebsrolle (11) bewegbar gelagerten Trägern (2, 3) mittels Andruckeinrichtungen (8) in Kontakt mit dem Umfang der Antriebsrolle bringbar sind, und mit wenigstens einem, den Trägern für die Bandspulen zugeordneten Massekörper (32, 19, 20) zum Ausgleich des Massenträgheitsmomentes der beweglichen Träger mit den Bandspulen (6 und 7) im Falle von am Laufwerk angreifenden Stoßkräften dadurch gekennzeichnet, daß jeder Träger (2, 3) mit dem wenigstens einen Massekörper (32 oder 19, 20) über in der Ebene und bezüglich der Symmetrieachse des Bandlaufwerks symmetrisch liegende Verbindungselemente (9, 10) verbunden ist, die entweder am Ort der Träger (2, 3) oder am Ort des Massekörpers (32 oder 19, 20) mit einer Geraden senkrecht zur Symmetrieachse des Bandlaufwerks einen vorgegebenen spitzen Winkel ($\alpha$, $\beta$) bilden, wobei die erforderliche Masse ($m_G$) des wenigstens einen Massekörpers (32 bzw. 19, 20) um einen durch den vorgegebenen Winkel bestimmten Faktor (cos $\alpha$, cos $\beta$) verringert werden kann.

2. Bandlaufwerk nach Anspruch 1, dadurch gekennzeichnet, daß ein gemeinsamer Massekörper (32) für beide Träger (2, 3) vorgesehen ist.

3. Bandlaufwerk nach Anspruch 1, dadurch gekennzeichnet, daß für jeden Träger (2, 3) jeweils ein Massekörper (19 bzw. 20) vorgesehen ist.

4. Bandlaufwerk nach Anspruch 2 oder 3, dadurch gekennzeichnet, daß die Träger (2, 3) und der bzw. die ihnen zugeordnete(n) Massekörper (19, 20, 32) durch über Umlenkrollen (16, 17, 30, 31) geführte flexible Verbindungselemente (9, 10) miteinander verbunden sind.

5. Bandlaufwerk nach Anspruch 4, dadurch gekennzeichnet, daß die flexible Verbindungselemente (9, 10) durch Seile gebildet sind.

6. Bandlaufwerk nach einem der Ansprüche 1 oder 5, dadurch gekennzeichnet, daß die Träger (2, 3) mit Verlängerungen (2', 3') ausgebildet sind, an welchen die Verbindungselemente befestigt sind zur Erhöhung der durch den (die) Massekörper (32 bzw. 19, 20) erzeugten Ausgleichskraft (Ausgleichskräfte) ($K_G$) bzw. zur Verringerung der Masse ($m_G$) der Massekörper.

7. Bandlaufwerk nach einem der Ansprüche 4 oder 5, dadurch gekennzeichnet, daß die flexiblen Verbindungselemente (9, 10) über eine nach dem Prinzip des Flaschenzugs wirkende Seilführung geführt sind zur Erhöhung der durch den (die) Massekörper (32 bzw. 19, 20) erzeugten Ausgleichskraft (Ausgleichskräfte) ($K_G$) bzw. zur Verringerung der Masse ($m_G$) der Massekörper.

8. Bandlaufwerk nach einem der Ansprüche 2 oder 3, dadurch gekennzeichnet, daß im Falle von zwei Massekörpern (19, 20) diese in Reihe mit den Andruckeinrichtungen (8) angeordnet sind.

9. Bandlaufwerk nach einem der Ansprüche 2 oder 3, dadurch gekennzeichnet, daß im Falle von einem Massekörper (32) dieser parallel zu den Andruckeinrichtungen (8) angeordnet ist.

10. Bandlaufwerk nach Anspruch 8, dadurch gekennzeichnet, daß die beiden Massekörper (19, 20) über die Andruckeinrichtungen (8) direkt miteinander verbunden sind.

**Claims**

1. A tape transport apparatus comprising a central drive capstan and take-up and supply reels (6 and 7) which are mounted on supports (2, 3) that are movable relative to the drive capstan (11), and which can be caused to make contact with the periphery of the capstan by biasing means (8), as well as one or more counterweights (32; 19 and 20), associated with the supports for the tape reels, for compensating the mass moment of inertia of the movable supports and the tape reels (6 and 7) when impact forces act on the tape transport, wherein each support (2, 3) is connected to one or more counterweights (32; 19 and 20) via connecting means (9, 10) which are arranged in the plane of the tape transport and symmetrically with respect to the transport's axis of symmetry, and form, at the locations of the supports (2, 3) or at the location(s) of the counterweight(s) (32; 19 and 20), a predetermined acute angle ($\alpha$, $\beta$) with a straight line normal to the axis of symmetry of the tape transport, it being possible for the requisite mass ($m_G$) of the counterweight(s) (32; 19 and 20) to be reduced by a factor (cos $\alpha$, cos $\beta$) determined by the predetermined angle.

2. A tape transport apparatus as claimed in claim 1, wherein a common counterweight (32) is provided for the two supports (2 and 3).

3. A tape transport apparatus as claimed in claim 1, wherein a counterweight (19, 20) is provided for each support (2, 3).

4. A tape transport apparatus as claimed in claim 2 or 3, wherein the supports (2 and 3) and the counterweight(s) (32; 19 and 20) associated therewith are connected together by flexible connecting means (9, 10) guided over rolls (16, 17, 30, 31).

5. A tape transport apparatus as claimed in claim 4, wherein the flexible connecting elements (9, 10) are in the form of cords.

6. A tape transport apparatus as claimed in claim 1 or 5, wherein the supports (2 and 3) are provided with extensions (2' and 3') to which the connecting means are fastened, in order to increase the compensating force(s) ($K_G$) produced by the counterweight(s) (32; 19 and 20), or to reduce the mass ($m_G$) of the counterweight(s).

7. A tape transport apparatus as claimed in claim 4 or 5, wherein the flexible connecting elements (9, 10) are guided over the rolls in such a way that they together operate like a tackle, in order to increase the compensating force(s) ($K_G$) produced by the counterweight(s) (32; 19 and 20), or to reduce the mass ($m_G$) of the counterweight(s).

8. A tape transport apparatus as claimed in claim 2 or 3, wherein, if two counterweights (19 and 20) are present, they are arranged in series with the biasing means (8).

9. A tape transport apparatus as claimed in claim 2 or 3, wherein, if one counterweight (32) is present, it is arranged parallel to the biasing means (8).

10. A tape transport apparatus as claimed in claim 8, wherein the two counterweights (19 and 20) are directly connected together by the biasing means (8).

## Revendications

1. Mécanisme d'entraînement de bande, selon le principe d'enroulement par contact, comportant des bobines de bande (6 et 7) pour libérer et recevoir une bande, qui, sur des supports (2, 3) montés mobiles par rapport à un galet d'entraînement (11), peuvent, grâce à des moyens de serrage (8), être amenés au contact avec la périphérie du galet d'entraînement, et au moins un corps formant masse (32, 19, 20), associé aux supports des bobines de bande, pour équilibrer le couple d'inertie des supports mobiles et des bandes (6 et 7) dans le cas de chocs appliqués au mécanisme, caractérisé par le fait que chaque support (2, 3) est relié au (ou aux) corps formant masse(s) (32 ou 19, 20) par des éléments de liaison (9, 10) situés dans le plan et symétriquement par rapport à l'axe de symétrie du mécanisme d'entraînement de bande, éléments qui, soit à la rencontre avec le support (2, 3), soit à la rencontre avec le corps formant masse (32, ou 19, 20) font un angle aigu ($\alpha$, $\beta$) prédéterminé avec une ligne perpendiculaire à l'axe de symétrie du mécanisme d'entraînement de bande, la masse ($m_G$) nécessaire pour le (ou les) corps (32 ou 19, 20) pouvant être réduite d'un facteur ($\cos \alpha$, $\cos \beta$) déterminé par l'angle prévu.

2. Mécanisme d'entraînement de bande selon la revendication 1, caractérisé par le fait qu'il est prévu un corps de masse commun (32) pour les deux supports (2, 3).

3. Mécanisme d'entraînement de bande selon la revendication 1, caractérisé par le fait qu'il est prévu, par chaque support (2, 3), un corps de masse (19 ou 20) respectif.

4. Mécanisme d'entraînement de bande selon la revendication 2 ou 3, caractérisé par le fait que les supports (2, 3 et le (ou les) corps de masse qui leur est (sont) associé(s) (19, 20, 32) sont reliés entre eux par des éléments de liaison (9, 10) flexibles passant sur des galets de renvoi (16, 17, 30, 31).

5. Mécanisme d'entraînement de bande selon la revendication 4, caractérisé par le fait que les éléments de liaison flexibles (9, 10) sont formés par des cordes.

6. Mécanisme d'entraînement de bande selon l'une des revendications 1 à 5, caractérisé par le fait que les supports (2, 3) présentent des prolongements (2', 3') sur lesquels sont fixés les éléments de liaison pour augmenter la (les) force(s) d'équilibrage ($K_G$) produite(s) par le (les) corps de masse (32 ou 19, 20), ou pour réduire la masse ($m_G$) du (des) corps de masse.

7. Mécanisme d'entraînement de bande selon l'une des revendications 4 ou 5, caractérisé par le fait que les éléments de liaison flexibles (9, 10) sont guidés par des moyens de guidage de corde agissant selon le principe du moufle, afin d'augmenter la (les) force(s) d'équilibrage ($K_G$) produite(s) par le (les) corps de masse (32 ou 19, 20), ou pour réduire la masse ($m_G$) de (des) corps de masse.

8. Mécanisme d'entraînement de bande selon l'une des revendications 2 ou 3, caractérisé par le fait que, dans le cas de deux corps de masse (19, 20), ceux-ci sont montés en série avec les moyens de serrage (8).

9. Mécanisme d'entraînement de bande selon l'une des revendications 2 ou 3, caractérisé par le fait que, dans le cas d'un seul corps de masse (32), celui-ci est monté en parallèle avec les moyens de serrage (8).

10. Mécanisme d'entraînement de bande selon la revendication 8, caractérisé par le fait que les deux corps de masse (19, 20) sont reliés entre eux directement par les moyens de serrage (8).

FIG.1

1
13
2
3
4
5'
12
4
11
5
5
6
7
2'
3'
22
18
β
21
14
15
16
17
9
23
19
8
20
24
10

FIG.3
2'
8
3'
30
31
9
α
10
34
32
33
FIG.4
2'
8
3'
30
9
α
31
10
32
33
FIG.2
2'
3'
16
9
19
8
20
10
17